# EUROPÄISCHE PATENTSCHRIFT

(11) **EP 2 405 638 B1**
(45) Veröffentlichungstag und Bekanntmachung des Hinweises auf die Patenterteilung: **18.03.2015**
(21) Anmeldenummer: 10075297.1
(22) Anmeldetag: 08.07.2010
(51) Int. Cl.: H04M 7/00

(54) **Verfahren und System zur audio-visuellen Telekommunikation**
Method and system for audio-visual telecommunication
Procédé et système de télécommunication audiovisuelle

(43) Veröffentlichungstag der Anmeldung: 11.01.2012
(73) Patentinhaber: Deutsche Telekom AG, 53113 Bonn (DE)
(72) Erfinder: Schröder, Karsten, 10317 Berlin (DE); Scheerbarth, Thomas, 12555 Berlin (DE)
(74) Vertreter: Nern, Peter-Michael

(56) Entgegenhaltungen:
- EP-A1- 1 566 984
- EP-A1- 2 120 440
- EP-A2- 1 324 608
- WO-A1-2009/133426
- GB-A- 2 357 659
- US-A1- 2007 019 630
- US-A1- 2007 147 399
- US-A1- 2009 128 502

## Beschreibung

Die Erfindung betrifft eine Lösung zur audio-visuellen Telekommunikation zwischen mindestens zwei Kommunikationspartnern. Sie bezieht sich auf ein entsprechendes Verfahren und ein für dessen Durchführung geeignetes Kommunikationssystem.

Aus dem Stand der Technik sind sowohl Lösungen für die rein sprachliche Telekommunikation als auch Lösungen für eine audio-visuelle Kommunikation bekannt. Dabei erfolgt die sprachliche Kommunikation unter Nutzung entsprechender Geräte, im Allgemeinen Telefonen herkömmlicher Prägung mit einem Sprechhörer über das Telefonfestnetz, mittels Mobiltelefonen beziehungsweise vergleichbarer Geräte über Mobilfunknetze oder aber mittels Sprechhörern oder so genannten Headsets nach dem Prinzip des Voice-over-IP über das Internet. Auch eine netzübergreifende Kommunikation, also beispielsweise die Kommunikation zwischen einem Festnetzteilnehmer und einem Mobilfunkteilnehmer, ist mit Hilfe von an den jeweiligen Netzwerkgrenzen angeordneten Gateways möglich. Für die audio-visuelle Telekommunikation werden entsprechende Bildtelefone, welche über ein elektronisches Display und eine gegebenenfalls in das Gerät integrierte Kamera verfügen, entsprechend ausgestattete Festnetz- oder Mobilfunkkomponenten oder internetbasierte Lösungen mit Display und Kamera verwendet. In diesem Zusammenhang ist es üblich, dass für die audio-visuelle Kommunikation Geräte beziehungsweise Endgeräte verwendet werden, welche sowohl mit den erforderlichen Videokomponenten ausgestattet sind als auch über die für die Sprachkommunikation notwendigen akustischen Komponenten verfügen. Darüber hinaus ist es so, dass eine Telekommunikationsverbindung zwischen zwei Kommunikationspartnern in der Regel von vornherein entweder als reine Gesprächsverbindung oder aber als Verbindung zur Übertragung von sowohl Audio- als auch Videosignalen aufgebaut wird, wobei insbesondere im letztgenannten Fall die Kommunikationspartner über das entsprechende, teilweise teure Equipment verfügen müssen.

Darüber hinaus ist es bekannt, gewissermaßen asynchron beziehungsweise im Simplexbetrieb audio-visuelle Nachrichten auszutauschen. Ein Beispiel hierfür ist der Multimedia Messaging Service (MMS), welcher es ermöglicht, an einen anderen Kommunikationspartner eine Nachricht mit Bildern oder auch akustische Bestandteile enthaltende Videosequenzen zu übermitteln. Gegebenenfalls können die letztgenannten Videosequenzen beim Empfänger auch unter Nutzung eines Heimnetzwerks über ein in das Heimnetzwerk einbezogenes elektronisches Display mit zugehörigen Lautsprechern ausgegeben werden.

Wünschenswert ist es jedoch, audio-visuelle Nachrichten zwischen den Kommunikationspartnern synchron, also voll duplex, auszutauschen, mit der Möglichkeit, auf Mitteilungen des jeweils anderen Kommunikationspartners umgehend eingehen zu können. Entsprechendes ist mit den bereits vorstehend genannten Geräten beziehungsweise Komponenten für die Bildtelefonie oder die internetzgestützte Übertragung audio-visueller Daten möglich. Hierbei besteht, wie bereits ausgeführt, zwischen den Kommunikationspartnern unmittelbar eine Verbindung zur Übertragung audio-visueller Daten.

Aus der EP 2 073 542 A2 ist ein mit einem DECT-Telefon kombinierbares elektronisches Display, beispielsweise in der Art eines elektronischen Bilderrahmens, bekannt. Dem Nutzer der entsprechenden Lösung ist dabei unter Verwendung der aus dem DECT-Telefon und dem elektronischen Display gebildeten Kombination eine audio-visuelle Kommunikation ermöglicht Dies setzt jedoch voraus, dass der Nutzer unter Durchführung gegebenenfalls umfangreicherer Bedienschritte eine Beziehung zwischen dem DECT-Telefon und dem entsprechenden Display aktiv herstellt. Darüber hinaus muss das letztgenannte Display selbstverständlich selbst über ein entsprechendes DECT-Modul verfügen. Die in der Druckschrift beschriebene Lösung ist in jedem Falle an die Nutzung eines DECT-Telefons gebunden, so dass ein Nutzer, welcher von ihr Gebrauch machen möchte, sich gegebenenfalls erst ein entsprechendes schnurloses Telefon zulegen muss. Unter Umständen ist hierbei auch die Anzahl der an einer entsprechenden audio-visuellen Kommunikation beteiligten Geräte und der insoweit gegebene Hardwareaufwand vergleichsweise groß, da ein DECT-Telefon in der Regel über eine Basisstation verfügt, welche zugleich als Ladegerät für das betreffende Telefon dient und insoweit unentbehrlich ist. Zudem kann es unter Umständen wünschenswert sein, von einer zwischen Kommunikationspartnern zunächst bestehenden Sprachverbindung auf eine audio-visuelle Kommunikation überzugehen.

Durch die EP 2 120 440 A1 wird eine Lösung beschrieben, nach welcher zwischen zwei Kommunikationspartnern beziehungsweise Teilnehmern zunächst eine Gesprächsverbindung und dann selbsttätig - offenbar ohne Zutun der Teilnehmer - eine Videoverbindung aufgebaut wird. Die Teilnehmer müssen sich hierfür bei einem Videoverbindungsdienst registrieren. Nach dem Aufbau der Gesprächsverbindung wird der Videoverbindungsdienst durch einen offenbar auch als Media Gateway Soft Switch, über welchen die Gesprächsverbindung geführt wird, nach einer mit der für die Gesprächsverbindung genutzten Rufnummer des angerufenen Teilnehmers korrespondierenden SIP-Nummer für den Aufbau einer Videoverbindung. Sofern eine solche SIP-Nummer bei dem Videoverbindungsdienst registriert ist, wird diese an das für den Aufbau der Gesprächsverbindung verwendete Endgerät übertragen und durch dieses eine Verbindungsanforderung zum Aufbau einer Videoverbindung ausgesendet sowie schließlich die Videoverbindung aufgebaut. Die Lösung erfordert in jedem Falle eine Subskription der sie nutzenden Teilnehmer bei dem Videoverbindungsdienst. Nach dem Aufbau der Videoverbindung bleiben diese und die zuvor aufgebaute Gesprächsverbindung unabhängig von der Beschaffenheit der von den Teilnehmern genutzten Endgeräte nebeneinander bestehen. Insbesondere Letzteres gilt auch für vergleichbare, in den Druckschriften EP 1 324 608 A und GB 2 357 659 A beschriebene Lösungen.

Aufgabe der Erfindung ist es, eine alternative Lösung zur audio-visuellen Telekommunikation bereitzustellen, welche es ihrem Nutzer ermöglicht, insbesondere die von ihm für die Sprachkommunikation verwendeten Geräte, unabhängig von ihrem Typ, weiterhin einzusetzen und sich hierbei im Übrigen der vertrauten Methoden des Verbindungsaufbaus zu bedienen und welche darüber hinaus bezüglich dabei verwendeter Netze ressourcenschonend ist. Hierzu sind ein Verfahren und ein System zur Durchführung des Verfahrens anzugeben.

Die Aufgabe wird durch ein Verfahren mit den Merkmalen des Patentanspruchs 1 gelöst. Ein die Aufgabe lösendes System ist durch den ersten Sachanspruch charakterisiert. Vorteilhafte Ausbeziehungsweise Weiterbildungen der Erfindung sind durch die jeweiligen Unteransprüche gegeben. In den nachfolgenden Darstellungen zur Erläuterung der Erfindung werden der Begriff "Kommunikationspartner" und der in der Telekommunikation häufiger gebrauchte Begriff "Teilnehmer" synonym verwendet. Daher Sinne handelt es sich bei den in den Ansprüchen genannten Kommunikationspartnern auch um Teilnehmer im Sinne der Telekommunikation.

Nach dem zur Lösung der Aufgabe vorgeschlagenen Verfahren zur audio-visuellen Telekommunikation zwischen mindestens zwei Kommunikationspartnern wird zwischen diesen beiden Kommunikationspartnern zunächst eine Sprachverbindung über ein Telefonnetz (und danach eine Videoverbindung, vorzugsweise über ein IP-Netz) aufgebaut. Zum Aufbau dieser Sprachverbindung verwenden die Kommunikationspartner jeweils eine an sich bekannte Sprachkomponente, nämlich ein Endgerät für die Sprachkommunikation (zum Beispiel ein Festnetztelefon bekannter Bauart) oder eine für die Sprachkommunikation ausgebildete Funktionseinheit eines elektronischen Geräts (zum Beispiel PC mit Festnetzanschluss und Headset). (Gemäß dem vorgeschlagenen Verfahren) wird nach dem Bestehen der Sprachverbindung zwischen den betreffenden Kommunikationspartnern mittels Videokomponenten, nämlich mittels dafür ausgebildeter Geräte oder Gerätefunktionseinheiten, eine weitere Verbindung zur visuellen Kommunikation aufgebaut, wobei die Videokomponente mindestens eines der Kommunikationspartner Bestandteil einer Kombinierten Sprach-Video-Einheit ist. Zum Aufbau dieser weiteren Verbindung beziehungsweise der Videoverbindung wird seitens mindestens eines der Kommunikationspartner eine Verbindungsanforderung an einen zentralen Netzwerkdienst übermittelt. Dies geschieht durch die Betätigung eines Bedienelements an der für die Videoverbindung genutzten Videokomponente oder durch das Starten einer von der für die bereits bestehende Sprachverbindung genutzten Sprachkomponente ausführbaren Anwendung. Nach dem Erhalt der Verbindungsanforderung wird durch den genannten zentralen Netzwerkdienst das Bestehen einer Sprachverbindung zwischen den Kommunikationspartnern festgestellt und aufgrund einer Zuordnung zwischen einem Adressierungsmerkmal der von einem jeden Kommunikationspartner für die visuelle Kommunikation verwendeten Videokomponente und der Rufnummer der in die bestehende Sprachverbindung einbezogenen Sprachkomponente des jeweils selben Kommunikationspartners durch den zentralen Netzwerkdienst entweder die gewünschte Videoverbindung unmittelbar hergestellt oder es werden an die Videokomponente des die Videoverbindung anfordernden Kommunikationspartners die hierfür erforderlichen Adressangaben der Gegenstelle für den Aufbau der entsprechenden Videoverbindung übermittelt. Die vorgenannte Zuordnung zwischen dem Adressierungsmerkmal der Videokomponente eines Kommunikationspartners und der für die Sprachverbindung genutzten Rufnummer desselben Kommunikationspartners besteht dabei aufgrund einer früher erfolgten Registrierung bei dem zentralen Netzwerkdienst oder wird durch dessen Einheiten bei Anforderung der Videoverbindung festgestellt beziehungsweise hergestellt. Nähere Ausführungen dazu sollen später noch gegeben werden.

Das zur Lösung der Aufgabe vorgeschlagene Verfahren ist weiterhin dadurch ausgestaltet, dass die Videoverbindung nach ihrem erfolgreichen Aufbau im Abschnitt zwischen der kombinierten Sprach-Videoeinheit des mindestens einen Kommunikationspartners und dem von dieser Sprach-Video-Einheit genutzten Zugangsnetz, beziehungsweise - "aus der Sicht" der ebenfalls bestehenden Sprachverbindung - im Bereich zwischen der betreffenden Sprachvideo-Einheit und dem zentralen Netzwerkdienst, ressourcenschonen mit der Sprachverbindung zu einer Verbindung zusammengeführt wird. Dies ist im Hinblick darauf, dass der Verbindungsaufbau heutzutage ohnehin softwaregesteuert erfolgt, technisch möglich. Eine entsprechende Sprach-Video-Einheit kann dabei dadurch gebildet sein, dass die Videokomponente und die Sprachkomponente in einem Gerät integriert sind oder zwischen ihnen teilnehmerseitig eine direkte Wirkverbindung (beispielsweise eine direkte Kabelverbindung) besteht.

Bei dem mindestens einen Adressierungsmerkmal der jeweiligen Videokomponente kann es sich um eine Rufnummer, eine Voicebeziehungsweise eine Video-over-IP-Adresse oder um die Kombination der MAC-Adresse der Netzwerkarte der Videokomponente und die ihr aktuell zugeteilte dynamische IP-Adresse handeln. Im letztgenannten Fall wird vorausgesetzt, dass die betreffende Videokomponente im Moment ihres Online-Gehens und/oder im Moment des Initiierens der Videoverbindung die ihr dynamisch zugeteilte IP-Adresse an den bereits angesprochenen zentralen Netzwerkdienst übermittelt. Ferner wurde bereits zuvor die eindeutige MAC-Adresse der betreffenden Videokomponente in einer Datenbank des zentralen Netzwerkdienstes in Zuordnung zu einer Rufnummer desselben, also auch diese Videokomponente verwendenden Kommunikationspartners beziehungsweise Teilnehmers gespeichert. Diese Mac-Adresse, über welche die Zuordnung zwischen aktueller IP-Adresse der Videokomponente und Rufnummer desselben Teilnehmers herstellbar ist, wird im Zusammenhang mit der Verbindungsanforderung zum Aufbau der Videoverbindung ebenfalls an den Netwerkdienst übermittelt oder von dessen zugehörigen Einheiten ausgelesen.

Wie bereits ausgeführt, wird die Zuordnung zwischen dem Adressierungsmerkmal der Videokomponente eines Kommunikationspartners und der von ihm für die bestehende Sprachverbindung genutzten Rufnummer gemäß einer nach der Erfindung vorgesehenen Möglichkeit durch den zentralen Netzwerkdienst bei der Anforderung der Videoverbindung seitens des betreffenden Kommunikationspartners hergestellt. Diese Möglichkeit besteht insbesondere dann, wenn der für die Sprachverbindung genutzte Anschluss und der Zugang zu dem für eine IP-basierte Videoverbindung genutzten Internet durch denselben Provider bereitgestellt werden und dieser Provider auch Anbieter beziehungsweise Unterhalter des zentralen Netzwerkdienstes ist. Da diesem Provider die der Videokomponente jeweils aktuelle zugeteilte dynamische IP-Adresse sowie der diese Videokomponente nutzende Teilnehmer und sowieso die Rufnummer des betreffenden Teilnehmers (Kommunikationspartners) im Festnetz bekannt sind, stehen diese Informationen selbstverständlich auch dem zentralen Netzwerkdienst zur Verfügung, welcher sie zur Herstellung einer Zuordnung zwischen den genannten Adressierungsmerkmalen und damit zur Durchführung des Verfahrens nutzen kann. Sofern jedoch zur Herstellung der Sprachverbindung einerseits und der Videoverbindung andererseits durch den die entsprechenden Verbindungen aufbauenden Kommunikationspartner unterschiedliche Provider genutzt werden, ist die entsprechende Zuordnung erfindungsgemäß, wie bereits ausgeführt, aufgrund einer Registrierung bei dem zentralen Netzwerkdienst gegeben, so dass bei dem zentralen Netzwerkdienst für die Durchführung des Verfahrens ein entsprechender Datenbankeintrag zur Verfügung steht.

Grundidee der Erfindung ist es, einer zwischen Kommunikationspartnern in Form einer Sprachverbindung in einem Telefonnetz bestehenden Kommunikationsbeziehung in einfacher Weise, nämlich vorzugsweise durch Betätigung nur eines Bedienelements, eine weitere Kommunikationsbeziehung hinzuzufügen, die dazu genutzte Videoverbindung aber nach ihrem erfolgreichen Aufbau im Bereich zwischen der von mindestens einem Kommunikationspartner genutzten Sprach-Video-Einheit und dem Zugangsnetz für die Videoverbindung ressourcenschonend mit der zuerst aufgebauten Sprachverbindung zusammenzuführen. Ein Vorzug ist es dabei, wie auch durch die später erläuterten Ausführungsbeispiele noch deutlich wird, dass das Verfahren seitens der Kommunikationsteilnehmer unter Verwendung der auch bisher von ihnen für die Sprachkommunikation genutzten Endgeräte beziehungsweise der entsprechenden Funktionseinheiten elektronischer Geräten durchgeführt werden kann.

Für die weitere, zusätzlich zu einer bereits bestehenden Sprachverbindung aufgebaute Verbindung zwischen den Kommunikationspartnern, also die Videoverbindung, wird, wie bereits angedeutet, entsprechend einer bevorzugten Ausgestaltung des Verfahrens eine IP-Verbindung genutzt. Zwar ist es auch hierbei möglich, dass die Verbindungsanforderung zum Aufbau der Videoverbindung nur seitens eines der Kommunikationsteilnehmer erfolgt, nämlich insbesondere dann, wenn der Videokomponente des anderen Kommunikationspartners eine feste IP-Adresse zugeordnet ist oder die Komponente unter einer DynDNS-Adresse ansprechbar ist. Im Hinblick auf die im Allgemeinen übliche Nutzung dynamischer IP-Adressen wird jedoch in diesem Falle die Videoverbindung vorzugsweise aufgrund einer entsprechenden Verbindungsanforderung beider beziehungsweise aller Kommunikationspartner bei dem zentralen Netzwerkdienst aufgebaut. Im Rahmen dieser Verbindungsanforderung werden dabei durch die hierfür genutzten Videokomponenten beziehungsweise durch mit ihnen in einer Wirkverbindung stehenden Netzzugangseinrichtungen (zum Beispiel Router) an den zentralen Netzwerkdienst die dem jeweiligen Kommunikationspartner aktuell zugeteilte dynamische IP-Adresse und Geräteangaben zu der für die Videoverbindung genutzten Videokomponente übertragen, welche das Überprüfen einer Zuordnung zwischen der entsprechenden Videokomponente und der Rufnummer der Sprachkomponente desselben Teilnehmers ermöglichen.

Das erfindungsgemäße Verfahren ermöglicht auch Konferenzschaltungen, bei denen mehr als zwei Kommunikationspartner gleichzeitig miteinander kommunizieren. Im Sinne der Erfindung wird dabei im Rahmen einer entsprechenden Telefonkonferenz zumindest zwischen zwei der Kommunikationspartner eine zusätzliche Videoverbindung aufgebaut.

Ein zur Durchführung des Verfahrens geeignetes Kommunikationssystem, nämlich ein System zur audio-visuellen Telekommunikation, besteht aus:
- jeweils einer Sprachkomponente je Kommunikationspartner, nämlich einem Endgerät für die Sprachkommunikation oder einer für die Sprachkommunikation ausgebildeten Funktionseinheit,
- jeweils einer Videokomponente je Kommunikationspartner, nämlich einem für die Videokommunikation ausgebildeten Gerät oder einer dafür ausgebildeten Gerätefunktionseinheit,
- einem Kommunikationsnetzwerk oder mehreren Kommunikationsnetzwerken, zwischen welchen Netzübergangseinrichtungen angeordnet sind sowie
- hard- und softwarebasierten Einheiten als Teil der Infrastruktur mindestens eines Kommunikationsnetzwerkes, welche einen zentralen Netzwerkdienst bereitstellen.

Dabei bilden die Sprachkomponente und die Videokomponente mindestens eines Kommunikationspartners eine Kombinierte Sprach-Video-Einheit aus. Zwischen den vorgenannten Sprachkomponenten der Kommunikationspartner besteht eine erste Kommunikationsverbindung als Sprachverbindung über das Telefonnetz und zwischen den Videokomponenten derselben Kommunikationspartner eine zweite Kommunikationsverbindung als Videoverbindung. Ferner sind sowohl für die über die Sprachverbindung miteinander verbundenen Sprachkomponenten der Kommunikationspartner als auch für ihre gleichzeitig über die Videoverbindung miteinander verbundenen Videokomponenten zur Nutzung des zentralen Netzwerkdienstes mindestens jeweils eine Kommunikationsadresse beziehungsweise mindestens ein Adressierungsmerkmal in einer Datenbank registriert, welche in einer der den Netzwerkdienst bereitstellenden Einheiten gehaltenen wird. Erfindungsgemäß ist bei dem solchermaßen ausgestalteten System in der bereits angesprochenen Datenbank des zentralen Netzwerkdienstes eine Beziehung zwischen der Rufnummer der von dem jeweiligen Kommunikationspartner für die Sprachverbindung genutzten Sprachkomponente und einem Adressierungsmerkmal der von demselben Kommunikationspartner für die Videoverbindung genutzten Videokomponente hergestellt. Die Videoverbindung ist aufgrund des Bestehens der Sprachverbindung zwischen den Kommunikationspartnern und einer entsprechenden Verbindungsanforderung durch mindestens einen der Kommunikationspartner sowie aufgrund der vorstehend genannten, in der Datenbank hergestellten Beziehung aufgebaut. Korrespondierend mit dem zuvor beschriebenen Verfahren ist bei dem zur Lösung der Aufgabe vorgeschlagenen Verfahren bei dem oder den eine kombinierte Sprach-Video-Einheit nutzenden Kommunikationspartnern die Videoverbindung nach ihrem erfolgreichen Aufbau im Bereich der betreffenden Sprach-Videoeinheit und dem Zugangsnetz für die Videoverbindung mit der zuvor aufgebauten Sprachverbindung zusammengeführt.

Vorzugsweise sind die Videokomponenten der Kommunikationspartner bei dem erfindungsgemäßen Kommunikationssystem teilnehmerseitig jeweils in ein lokales Netzwerk mit einem Router einbezogen. Im Falle einer solchen Ausbildung des Kommunikationssystems handelt es sich bei der zwischen den Videokomponenten aufgebauten Videoverbindung um eine IP-Verbindung. Die Videokomponenten der Kommunikationspartner können bei der zuvor erläuterten Ausbildungsform der Erfindung mit dem zugehörigen Router beispielsweise über eine WLAN-Verbindung oder aber auch über eine Bluetooth-Verbindung vernetzt sein. Entsprechend einer möglichen Ausbildungsform des erfindungsgemäßen Kommunikationssystems handelt es sich bei der Videokomponente mindestens eines Kommunikationspartners um einen digitalen elektronischen Bilderrahmen mit einer integrierten Kamera. Demgemäß handelt es sich bei einem in das zuvor erläuterte Kommunikationssystem einbeziehbaren digitalen elektronischen Bilderrahmen um ein Gerät, welches über eine Zentralverarbeitungseinheit (Mikroprozessor oder Mikrocontroller) und über Mittel zur Herstellung einer Funkverbindung, also beispielsweise eine WLAN-Sende-/Empfangseinheit oder eine Bluetooths-Sende-/Empfangseinheit, verfügt und das darüber hinaus mit einer integrierten elektronischen Videokamera ausgestattet ist.

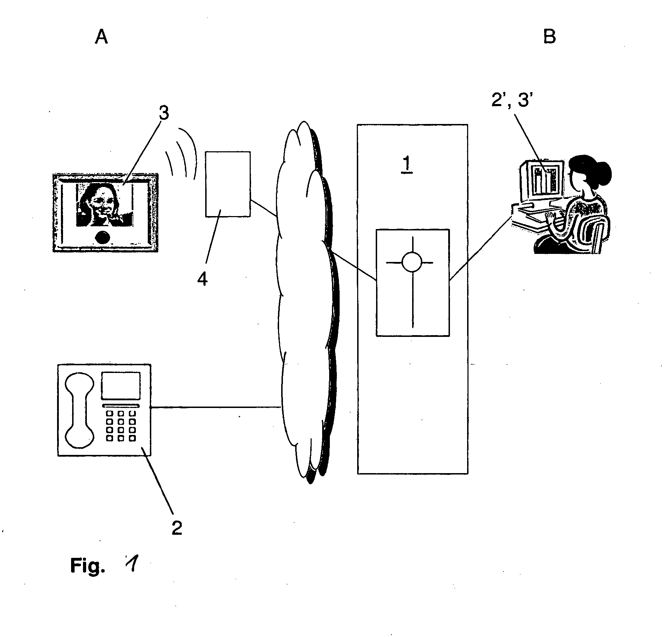

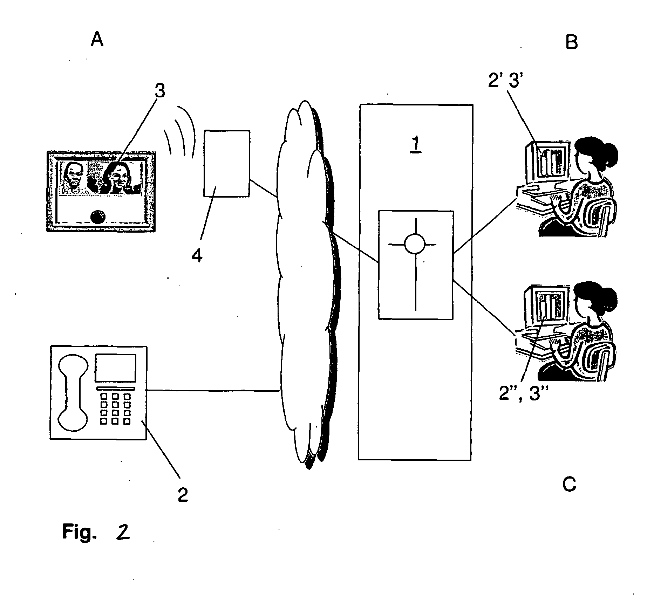

Die Erfindung soll nachfolgend anhand von Ausführungsbeispielen nochmals näher erläutert werden. Die zugehörigen Figuren 1 und 2 zeigen dazu mögliche Konstellationen beziehungsweise Konfigurationen des erfindungsgemäßen Systems für die audio-visuelle Telekommunikation zwischen zwei oder mehr Kommunikationspartnern. Unter Verwendung dieser verschiedenen Konfigurationen gestaltet sich der Ablauf beim Aufbau der Verbindungen für die audio-visuelle Telekommunikation jeweils wie nachfolgend im Einzelnen beschrieben.

Die Fig. 1 zeigt den prinzipiellen Aufbau einer Telekommunikationsbeziehung zwischen zwei Kommunikationspartnern, nämlich einem A- und B-Teilnehmer unter Anwendung entsprechender Systemkomponenten.

Die Telekommunikationsbeziehung wird zunächst in Form einer Sprachverbindung über eine Sprachkomponente 2,2', hier beispielsweise vom B-Teilnehmer zu dem ein Festnetztelefon verwendenden A-Teilnehmer aufgebaut.

Einer der Kommunikationspartner, beispielsweise der A-Teilnehmer betätigt ein Bedienelement an der zusätzlich, in die bestehende Kommunikationsbeziehung einzubeziehenden Videokomponente 3, 3', zum Beispiel den VK- (Videokonferenz-) Knopf eines digitalen elektronischen Bilderrahmens. Dieser Bedienvorgang startet die WLAN-Verbindung zwischen dem Router 4, 4' und der Videokomponente 3, 3', hier dem elektronischem Display. Gleichermaßen kann diese Kommunikationsbeziehung über ein anderes drahtloses (z.B. Bluetooth) oder drahtgebundenes Verbindungsverfahren hergestellt werden.

Über den Router 4 sendet das elektronische Display die Anforderung für eine Videoverbindung beziehungsweise die Anforderung eines Adressierungsmerkmales für die zu verbindende Gegenstelle an den zentralen Netzwerkdienst 1. Für diesen Dienst ist das elektronische Display des A-Teilnehmers durch den betreffenden Kommunikationspartner bereits früher bei dem zentralen Netzwerkdienst 1 registriert worden. Sobald der zentrale Netzwerkdienst 1 vom Router des A-Teilnehmers den angesprochenen Request erhält, prüft er die Registratur des elektronischen Displays des A-Teilnehmers. Unter der Voraussetzung, dass das elektronische Display dieses Kommunikationspartners registriert ist, können entsprechende Einheiten des Netzwerkdienstes 1 aufgrund einer entsprechenden, in einer internen Datenbank hinterlegten Zuordnung entnehmen, welche zugehörige Rufnummer oder sonstige Anschlusskennung das in die bereits bestehende Sprachverbindung einbezogne Gerät (Sprachkomponente 2, zum Beispiel Telefon) des A-Teilnehmers besitzt. Daraufhin kann der Netzwerkdienst die Telefonnummer oder sonstige Anschlusskennung des aktuellen Gesprächs- beziehungsweise Kommunikationspartners des A-Teilnehmers ermitteln. Diese Information bezüglich des anderen Kommunikationspartners (nämlich bezüglich des B-Teilnehmers) wird nun benutzt, um wiederum in der erwähnten internen Datenbank zu prüfen, ob der B-Teilnehmer ebenfalls ein elektronisches Display (Videokomponente 3') registriert hat. Unter der Voraussetzung, dass der B-Teilnehmer sein elektronisches Display als Bestandteil einer Kombinierten Sprach-Video-Einheit ebenfalls registriert hat und dieses gleichermaßen eine Verbindungsanforderung zum Aufbau einer Videoverbindung an den Netzwerkdienst 1 gerichtet hat, ist dieser in der Lage, den zu diesem Zeitpunkt per Sprachtelefonie kommunizierenden Kommunikationspartnern (A- und B-Teilnehmer) jeweils die Adressen der zugehörigen elektronischen Displays zuzuordnen. Nachdem der Netzwerkdienst das Bestehen dieser Zuordnung festgestellt hat, kann nun die vom A-Teilnehmer ausgesendete Verbindungsanforderung (der Request) zur Herstellung einer Videoverbindung weiterbehandelt werden. Dafür erfolgt nun eine Verkopplung der jeweiligen Videodaten. Dies bedeutet, dass die Kamerasignale vom A-Teilnehmer zum elektronischen Display des B-Teilnehmers und die Kameradaten von Teilnehmer B zum elektronischen Display des A-Teilnehmers übertragen werden. Damit wurde der ursprünglich ausgelöste Request des A-Teilnehmers erfüllt, beide Teilnehmer kommunizieren weiterhin über Ihre herkömmliche Sprachtelefonie und können zusätzlich ihre elektronischen Displays für eine Videokommunikation nutzen. Da es sich bei der von dem B-Teilnehmer verwendeten Sprach-Video-Einheit um ein Gerät für eine kombinierte Audio- und Videokommunikation handelt, ist es nicht erforderlich, die Sprachverbindung gesondert aufrecht zu halten. Die Sprachverbindung und die Videoverbindung werden daher im Abschnitt zwischen der Sprach-Video-Einheit und dem Zugangsnetz für die Videoverbindung zusammengeführt. Anhand der Figur 1 sollen die Abläufe der audio-visuellen Kommunikation zwischen den Kommunikationspartnern A, B nochmals im Detail erläutert werden. Die Telekommunikation wird in Form einer Sprachverbindung mittels einer Sprachkomponente 2' - hier ein Headset oder eine Mikrofon/Lautsprecherkombination - wie bereits ausgeführt, vom B-Teilnehmer zum A-Teilnehmer aufgebaut. Der B-Teilnehmer kommuniziert über eine videokommunikationsfähige Applikation vom PC aus mit dem A-Teilnehmer, welcher ein herkömmliches Festnetztelefon benutzt. Beide Teilnehmer kommunizieren zu diesem Zeitpunkt zunächst mit reiner Sprachtelefonie über eine entsprechende Sprachverbindung. Einer der Kommunikationspartner, nämlich der A-Teilnehmer betätigt ein Bedienelement an seiner Videokomponente 3 beziehungsweise seinem elektronischem Display (zum Beispiel einen VK- (Videokonferenz-) Knopf auf einem digitalen elektronischen Bilderrahmen. Dieser Bedienvorgang startet die Datenverbindung zwischen elektronischem Display und dem Router, wobei sich das elektronische Display des A-Teilnehmers am Router anmeldet.

Die Anmeldung wird vom Router als Anforderung/Request zum Aufbau einer Videoverbindung interpretiert. Diese Interpretation wird durch ein entsprechendes Protokoll innerhalb der Anmeldungsprozedur sichergestellt.

Der Router seinerseits sendet diesen Request an den zentralen Netzwerkdienst 1. Für diesen Dienst ist das elektronische Display des A-Teilnehmers bereits registriert. Sobald der zentrale Netzwerkdienst 1 vom Router 4 des ersten Kommunikationspartners, also des A-Teilnehmers den angesprochenen Request beziehungsweise die Verbindungsaufforderung zum Herstellen einer Videoverbindung erhält, prüft er die Registratur des elektronischen Displays des A-Teilnehmers. Unter der Voraussetzung, dass das elektronische Display dieses Kommunikationspartners A registriert ist, kann der Dienst aus einer internen Datenbank entnehmen, welche zugehörige Rufnummer die für die bestehende Sprachverbindung genutzte Sprachkomponente 2 beziehungsweise das Telefon des A-Teilnehmers besitzt. Der Netzwerkdienst 1 kann dann prüfen, mit wem der A-Teilnehmer gerade spricht, das heißt, welche Rufnummer beziehungsweise Kommunikationsadresse der B-Teilnehmer besitzt. Nachdem der zentrale Netzwerkdienst 1 die Kommunikationsadresse des B-Teilnehmers festgestellt hat, kann nun der vom A-Teilnehmer ausgelöste Request zur Herstellung einer Videoverbindung weiter behandelt werden. Zu diesem Zweck erfolgt nun eine Verkopplung der jeweiligen Videodaten. Dies bedeutet, dass die Kamerasignale vom A-Teilnehmer zum elektronischen Display des B-Teilnehmers und die Kameradaten von B-Teilnehmer zum elektronischen Display des A-Teilnehmers übertragen werden. Damit wurde der ursprünglich ausgelöste Request des A-Teilnehmers erfüllt, beide Teilnehmer kommunizieren weiterhin über die schon bestehende Sprachverbindung und können zusätzlich ihre Videokomponenten 3, 3', das heißt ihre elektronischen Displays für eine Videokommunikation nutzen. Da es sich bei dem elektronischen Display des B-Teilnehmers um eine kombinierte Audio- und Videoeinheit handelt, ist es nicht erforderlich, die Sprachverbindung über dessen Sprachkomponente aufrecht zu halten. Sofern darüber hinaus das elektronische Display des A-Teilnehmers eine kombinierte Audio- und Videokommunikation unterstützt, ist es ebenfalls nicht erforderlich, die Sprachverbindung über dessen Telefonendgerät aufrecht zu halten. Gegebenenfalls werden daher die Sprachverbindung und die Videoverbindung auch im Abschnitt zwischen den Einheiten des zentralen Netzwerkservices 1 und dem A-Teilnehmer durch den Netzwerkservice zu einer Verbindung zusammengeführt.

Die Fig. 2 zeigt den prinzipiellen Aufbau einer Telekommunikation zwischen mehreren Kommunikationspartnern beziehungsweise Konferenzteilnehmern, nämlich zwischen einem A-, einem B- und einem C-Teilnehmer, unter Anwendung einzelner, unterschiedlicher Systemkomponenten.

Die Telekommunikationsbeziehung wird in Form einer Sprachverbindung mittels Sprachkomponente 2', hier über ein Headset oder eine Mikrofon/Lautsprecherkombination zwischen zwei Kommunikationspartnern, dem A- und dem B-Teilnehmer aufgebaut. Parallel baut der B-Teilnehmer zu einem dritten Kommunikationspartner, nämlich dem C-Teilnehmer, eine Videoverbindung auf. Der B-Teilnehmer kommuniziert über eine videokommunikationsfähige Applikation von einem PC aus mit dem A-Teilnehmer, welcher ein herkömmliches Festnetztelefon benutzt und mit dem C-Teilnehmer, welcher ebenfalls eine videokommunikationsfähige Applikation an einem PC aus nutzt. Der A-Teilnehmer kommuniziert mit dem B-Teilnehmer und dem C-Teilnehmer über eine reine Sprachverbindung, B-Teilnehmer und C-Teilnehmer verwenden Videokommunikation. Der A-Teilnehmer betätigt nun ein Bedienelement an seiner Videokomponente 2, das heißt, an seinem elektronischem Display (zum Beispiel einen VK- (Videokonferenz-) Knopf auf einem digitalen elektronischen Bilderrahmen. Dieser Bedienvorgang startet die Datenverbindung zwischen elektronischem Display und dem Router 4, wobei sich das elektronische Display des A-Teilnehmers am Router 4 anmeldet. Die Anmeldung wird vom Router 4 als Aufforderung/Request zum Aufbau einer Videoverbindung beziehungsweise einer Videokonferenzverbindung interpretiert. Diese Interpretation wird wiederum, wie bereits ausgeführt, durch ein entsprechendes Protokoll innerhalb der Anmeldungsprozedur sichergestellt. Der Router 4 seinerseits sendet den Request an den zentralen Netzwerkdienst 1. Das elektronische Display des A-Teilnehmers ist für die Nutzung des zentralen Netzwerkdienstes bereits bei diesem registriert. Sobald der zentrale Netzwerkdienst 1 vom Router 4 des A-Teilnehmers den angesprochenen Request beziehungsweise die Aufforderung zum Herstellen einer Videokommunikation erhält, prüft er die Registratur des elektronischen Displays des A-Teilnehmers. Unter der Voraussetzung, dass das elektronische Display des A-Teilnehmers registriert ist, kann der Netzwerkdienst 1 aus einer internen Datenbank entnehmen, welche zugehörige Telefonnummer der A-Teilnehmer besitzt. Der Netzwerkdienst 1 kann dann prüfen, mit wem der A-Teilnehmer gerade spricht, das heißt, welche Kommunikationsadresse der B-Teilnehmer hat. Nachdem der Netzwerkdienst 1 die Kommunikationsadresse des Kommunikationspartners, nämlich des B-Teilnehmers festgestellt hat, kann nun der vom A-Teilnehmer ausgelöste Request zur Herstellung einer Videoverbindung beziehungsweise Videokonferenz weiter behandelt werden. Zu diesem Zweck erfolgt nun eine Verkopplung der jeweiligen Videodaten. Dies bedeutet, dass die Kamerasignale vom A-Teilnehmer zum elektronischen Display des B-Teilnehmers und des C-Teilnehmers und die Kameradaten vom B-Teilnehmer sowie vom C-Teilnehmer zum elektronischen Display des A-Teilnehmers übertragen werden. Damit wurde der ursprünglich ausgelöste Request des A-Teilnehmers erfüllt, alle drei Teilnehmer kommunizieren weiterhin über ihre bereits bestehende Sprachverbindung und können zusätzlich Videokomponenten 3, 3', 3" beziehungsweise Ihre elektronischen Displays für eine Videokommunikation nutzen, wobei die Videoverbindung im Bereich der von den Teilnehmern B und C genutzten Sprach-Video-Einheiten (PLS mit Headset, Display und Kamera) und dem Zugangsnetz für die Videoverbindung schließlich mit der jeweiligen Sprachverbindung zusammengeführt werden. Die in der Fig. 2 dargestellte Variante der Telekommunikation ist ein Ausführungsbeispiel für eine Kommunikation zwischen drei Teilnehmern. Prinzipiell ist das Verfahren auch für eine größere Anzahl von Teilnehmern einsetzbar und nutzbar. Sofern das elektronische Display des A-Teilnehmers eine kombinierte Audio- und Videokommunikation unterstützt, können gegebenenfalls wiederum im Abschnitt zwischen dem zentralen Netzwerkdienst und dem A-Teilnehmer die Sprach- und die Videoverbindung zu einer Verbindung zusammengeführt werden.

### Verwendete Bezugszeichen

- A: Kommunikationspartner, Teilnehmer
- B: Kommunikationspartner, Teilnehmer
- C: Kommunikationspartner, Teilnehmer
- 1: zentraler Netzwerkdienst
- 2, 2', 2": Sprachkomponente
- 3, 3', 3": Videokomponente
- 4: Router

## Patentansprüche

1. Verfahren zur audio-visuellen Telekommunikation zwischen mindestens zwei Kommunikationspartnern (A; B, C), nach welchem zwischen den mindestens zwei Kommunikationspartnern (A; B, C) zunächst eine Sprachverbindung über ein Telefonnetz aufgebaut wird, zu deren Aufbau die Kommunikationspartner jeweils eine Sprachkomponente (2, 2', 2"), nämlich ein Endgerät für die Sprachkommunikation oder eine für die Sprachkommunikation ausgebildete Funktionseinheit eines elektronischen Geräts, verwenden und nach dem Bestehen der Sprachverbindung zwischen den betreffenden Kommunikationspartnern (A; B, C) mittels Videokomponenten (3, 3', 3"), nämlich mittels für die Videokommunikation ausgebildeter Geräte oder Gerätefunktionseinheiten, eine weitere Verbindung zur visuellen Kommunikation aufgebaut wird, indem seitens mindestens eines der Kommunikationspartner (A; B, C) eine Verbindungsanforderung an einen zentralen Netzwerkdienst (1) übermittelt, durch welchen das Bestehen einer Sprachverbindung zwischen den Kommunikationspartnern (A; B, C) festgestellt und aufgrund einer Zuordnung zwischen einem Adressierungsmerkmal der Videokomponente (3, 3', 3") eines jeden Kommunikationspartners (A; B, C) und der Rufnummer der in die bestehende Sprachverbindung einbezogenen Sprachkomponente (2, 2', 2") des jeweils selben Kommunikationspartners die gewünschte Videoverbindung hergestellt wird oder an die Videokomponente (3, 3', 3") des die Videoverbindung anfordernden Kommunikationspartners (A; B, C) die hierfür erforderlichen Adressangaben der Gegenstelle für den Aufbau der entsprechenden Verbindung übermittelt werden, wobei die Videokomponente (3, 3', 3") mindestens eines Kommunikationspartners (A; B, C) und die für die Sprachverbindung genutzte Sprachkomponente (2, 2', 2") oder eine andere Sprachkomponente desselben Kommunikationspartners (A; B, C) eine kombinierte Sprach-Video-Einheit ausbilden, indem sie in einem Gerät integriert sind oder zwischen ihnen teilnehmerseitig eine direkte Wirkverbindung besteht, **dadurch gekennzeichnet, dass** die Verbindungsanforderung durch Betätigung eines Bedienelementes an der dazu genutzten Videokomponente (3, 3', 3") oder durch das Starten einer von der für die Sprachverbindung genutzten Sprachkomponente (2, 2', 2") ausführbaren Anwendung an den zentralen Netzwerkdienst (1) übermittelt wird, wobei die Zuordnung zwischen dem Adressierungsmerkmal der Videokomponenten der Kommunikationspartner (A; B, C) und der Rufnummer ihrer in die bestehende Sprachverbindung einbezogenen Sprachkomponente (2, 2', 2") bei dem zentralen Netzwerkdienst (1) vermerkt oder durch ihn herstellbar ist und dass nach dem erfolgreichen Aufbau der Videoverbindung die Sprachverbindung und die Videoverbindung im Abschnitt zwischen der bei dem mindestens einen Kommunikationspartner (A; B, C) für die Kommunikation genutzten kombinierten Sprach-Video-Einheit und einem von dieser Sprach-Video-Einheit für die Videoverbindung genutzten Zugangsnetz zu einer Verbindung zusammengeführt werden.

2. Verfahren nach Anspruch 1, **dadurch gekennzeichnet, dass** die Zuordnung zwischen der Rufnummer eines Kommunikationspartners (A; B, C) und einem Adressierungsmerkmal der von demselben Kommunikationspartner (A; B, C) für die Videoverbindung genutzten Videokomponente (3, 3', 3") aufgrund einer Registrierung bei dem zentralen Netzwerkdienst (1) hergestellt und dazu ein entsprechender Eintrag in einer Datenbank des zentralen Netzwerkdienstes (1) gespeichert wird.

3. Verfahren nach Anspruch 1 oder 2, **dadurch gekennzeichnet, dass** als Videoverbindung eine IP-Verbindung genutzt wird, welche aufgrund einer entsprechenden Verbindungsanforderung aller Kommunikationspartner (A; B, C) bei dem zentralen Netzwerkdienst aufgebaut wird.

4. Verfahren nach einem der Ansprüche 1 bis 3, wobei mehrere Kommunikationspartner (A; B, C) in einem Telefonnetz miteinander kommunizieren, **dadurch gekennzeichnet, dass** im Rahmen einer entsprechenden Telefonkonferenz zumindest zwischen zwei Kommunikationspartnern (A; B, C) eine zusätzliche Videoverbindung aufgebaut wird.

5. System zur audio-visuellen Telekommunikation zwischen mindestens zwei Kommunikationspartnern (A; B, C), nämlich Kommunikationssystem, bestehend aus jeweils einer Sprachkomponente (2, 2', 2") je Kommunikationspartner (A; B, C), nämlich einem Endgerät für die Sprachkommunikation oder einer für die Sprachkommunikation ausgebildeten Funktionseinheit eines elektronischen Gerätes, jeweils einer Videokomponente (3, 3', 3") je Kommunikationspartner (A; B, C), nämlich einem für die Videokommunikation ausgebildeten Gerät oder einer dafür ausgebildeten Gerätefunktionseinheit, einem Kommunikationsnetzwerk oder mehreren Kommunikationsnetzwerken, zwischen welchen Netzübergangseinrichtungen angeordnet sind und aus hard- und softwarebasierten Einheiten als Teil der Infrastruktur mindestens eines Kommunikationsnetzwerkes, welche einen zentralen Netzwerkdienst (1) bereitstellen, wobei
- die Videokomponente (3, 3', 3") mindestens eines Kommunikationspartners (A; B, C) und die für die Sprachverbindung genutzte Sprachkomponente (2, 2', 2") oder eine andere Sprachkomponente desselben Kommunikationspartners (A; B, C) eine kombinierte Sprach-Video-Einheit ausbilden, indem sie in einem Gerät integriert sind oder zwischen ihnen teilnehmerseitig eine direkte Wirkverbindung besteht,
- zwischen den Sprachkomponenten (2, 2', 2") von Kommunikationspartnern (A; B, C) eine erste Kommunikationsverbindung als Sprachverbindung über ein Telefonnetz und zwischen den Videokomponenten (3, 3', 3") derselben Kommunikationspartner (A; B, C) eine zweite Kommunikationsverbindung als Videoverbindung besteht,
- sowohl für die über die Sprachverbindung miteinander verbundenen Sprachkomponenten (2, 2', 2") der Kommunikationspartner (A; B, C) als auch für ihre gleichzeitig über die Videoverbindung miteinander verbundenen Videokomponenten (3, 3', 3") zur Nutzung des zentralen Netzwerkdienstes (1) mindestens jeweils eine Kommunikationsadresse und/oder ein Adressierungsmerkmal in einer, durch die den Netzwerkdienst bereitstellenden Einheiten gehaltenen Datenbank registriert sind,
- in der Datenbank eine Beziehung zwischen der Rufnummer der von dem jeweiligen Kommunikationspartner (A; B, C) für die Sprachverbindung genutzten Sprachkomponente (2, 2', 2") und einem Adressierungsmerkmal der von demselben Kommunikationspartner (A; B, C) für die Videoverbindung genutzten Videokomponente (3, 3', 3") hergestellt ist,
- die Videoverbindung aufgrund des Bestehens der Sprachverbindung zwischen den Kommunikationspartnern (A; B, C) und einer entsprechenden Verbindungsanforderung durch mindestens einen der Kommunikationspartner (A; B, C) sowie aufgrund der vorstehend genannten, in der Datenbank hergestellten Beziehung aufgebaut ist,
**dadurch gekennzeichnet, dass** die Videoverbindung im Abschnitt zwischen der bei dem mindestens einen Kommunikationspartner (A; B, C) für die Kommunikation genutzten kombinierten Sprach-Video-Einheit und einem von dieser Sprach-Video-Einheit für die Videoverbindung genutzten Zugangsnetz zu einer Verbindung zusammengeführt sind.

6. Kommunikationssystem nach Anspruch 5, **dadurch gekennzeichnet, dass** die Videokomponenten (3, 3', 3") der Kommunikationspartner (A; B, C) teilnehmerseitig jeweils in ein lokales Netzwerk mit einem Router (4, 4') einbezogen sind und dass es sich bei der zwischen den Videokomponenten (3, 3', 3") aufgebauten Videoverbindung um eine IP-Verbindung handelt.

7. Kommunikationssystem nach Anspruch 6, **dadurch gekennzeichnet, dass** die Videokomponente (3, 3', 3") mindestens eines Kommunikationspartners (A; B, C) über eine WLAN-Verbindung mit dem zugehörigen Router (4, 4') vernetzt ist.

8. Kommunikationssystem nach Anspruch 6, **dadurch gekennzeichnet, dass** die Videokomponente (3, 3', 3") mindestens eines Kommunikationspartners (A; B, C) über eine Bluetooth-Verbindung mit dem zugehörigen Router (4, 4') vernetzt ist.

9. Kommunikationssystem nach Anspruch 5 oder 6, **dadurch gekennzeichnet, dass** es sich bei der Videokomponente (3, 3', 3") mindestens eines Kommunikationspartners um einen digitalen elektronischen Bilderrahmen mit einer integrierten Kamera handelt.

## Claims

1. Process for audio-visual telecommunication between at least two communication partners (A; B, C), by which a voice link is firstly set up between the at least two communication partners (A; B, C) via a telephone network, for the setting-up of which voice link the communication partners each use a voice component (2, 2', 2"), namely a terminal device for voice communication or a functional unit, designed for voice communication, of an electronic device, and after the existence of the voice link between the communication partners (A; B, C) in question by means of video components (3, 3', 3"), namely by means of devices designed for video communication or by means of functional units, designed for video communication, of devices, a further link for visual communication is set up, by a connection request being communicated by at least one of the communication partners (A; B, C) to a central network service (1) by which the existence of a voice link between the communication partners (A; B, C) is ascertained, and on the basis of an assignment between an addressing feature of the video component (3, 3', 3") of each communication partner (A; B, C) and the call number of the voice component (2, 2', 2"), included in the existing voice link, of the same communication partner in the given case the desired video link is established, or the address particulars, necessary for this, of the remote station for the setting-up of the appropriate link are communicated to the video component (3, 3', 3") of the communication partner (A; B, C) requesting the video link, whereby the video component (3, 3', 3") of at least one communication partner (A; B, C) and the voice component (2, 2', 2") utilised for the voice link or another voice component of the same communication partner (A; B, C) form a combined voice-video unit, inasmuch as they have been integrated within a device, or a direct active link exists between them on the subscriber side, **characterised in that** the connection request is communicated to the central network service (1) by actuation of an operating element on the video component (3, 3', 3") utilised for this purpose or by the starting of an application capable of being executed by the voice component (2, 2', 2") utilised for the voice link, whereby the assignment between the addressing feature of the video components of the communication partners (A; B, C) and the call number of their voice component (2, 2', 2") included in the existing voice link has been noted at the central network service (1) or is capable of being established by it, and **in that** after the successful setting-up of the video link the voice link and the video link are brought together to form one link in the section between the combined voice-video unit utilised by the at least one communication partner (A; B, C) for the communication and an access network utilised by this voice-video unit for the video link.

2. Process according to Claim 1, **characterised in that** the assignment between the call number of a communication partner (A; B, C) and an addressing feature of the video component (3, 3', 3") utilised by the same communication partner (A; B, C) for the video link is established on the basis of a registration with the central network service (1), and for this purpose an appropriate entry is stored in a database of the central network service (1).

3. Process according to Claim 1 or 2, **characterised in that** by way of video link an IP link is utilised which is set up at the central network service on the basis of an appropriate connection request of all the communication partners (A; B, C).

4. Process according to one of Claims 1 to 3, wherein several communication partners (A; B, C) communicate with one another in a telephone network, **characterised in that** an additional video link is set up between at least two communication partners (A; B, C) within the framework of an appropriate conference call.

5. System for audio-visual telecommunication between at least two communication partners (A; B, C), namely a communication system consisting of, in each instance, a voice component (2, 2', 2") for each communication partner (A; B, C), namely a terminal device for voice communication or a functional unit, designed for voice communication, of an electronic device, in each instance a video component (3, 3', 3") for each communication partner (A; B, C), namely a device designed for video communication or a functional unit, designed for this purpose, of a device, a communication network or several communication networks, between which network gateway devices have been arranged, and of hardware-based and software-based units as part of the infrastructure of at least one communication network, which provide a central network service (1), wherein
- the video component (3, 3', 3") of at least one communication partner (A; B, C) and the voice component (2, 2', 2") utilised for the voice link or another voice component of the same communication partner (A; B, C) form a combined voice-video unit, inasmuch as they have been integrated within a device, or a direct active link exists between them on the subscriber side,
- between the voice components (2, 2', 2") of communication partners (A; B, C) a first communication link exists as a voice link via a telephone network, and between the video components (3, 3', 3") of the same communication partners (A; B, C) a second communication link exists as a video link,
- both for the voice components (2, 2', 2"), connected to one another via the voice link, of the communication partners (A; B, C) and for their video components (3, 3', 3"), connected to one another simultaneously via the video link, for the purpose of utilising the central network service (1) at least one, in each instance, communication address and/or one addressing feature has/have been registered in a database kept by the units providing the network service,
- in the database a relationship has been established between the call number of the voice component (2, 2', 2") utilised by the respective communication partner (A; B, C) for the voice link and an addressing feature of the video component (3, 3', 3") utilised by the same communication partner (A; B, C) for the video link,
- the video link has been set up on the basis of the existence of the voice link between the communication partners (A; B, C) and a corresponding connection request by at least one of the communication partners (A; B, C) and also on the basis of the aforementioned relationship established in the database,
**characterised in that** the video link in the section between the combined voice-video unit utilised by the at least one communication partner (A; B, C) for the communication and an access network utilised by this voice-video unit for the video link have been brought together to form one link.

6. Communication system according to Claim 5, **characterised in that** the video components (3, 3', 3") of the communication partners (A; B, C) have been incorporated on the subscriber side in each instance into a local network with a router (4, 4'), and **in that** in the case of the video link that has been set up between the video components (3, 3', 3") it is a question of an IP link.

7. Communication system according to Claim 6, **characterised in that** the video component (3, 3', 3") of at least one communication partner (A; B, C) has been networked with the associated router (4, 4') via a WLAN link.

8. Communication system according to Claim 6, **characterised in that** the video component (3, 3', 3") of at least one communication partner (A; B, C) has been networked with the associated router (4, 4') via a Bluetooth link.

9. Communication system according to Claim 5 or 6, **characterised in that** in the case of the video component (3, 3', 3") of at least one communication partner it is a question of a digital electronic picture frame with an integrated camera.

## Revendications

1. Procédé de télécommunication audiovisuelle entre au moins deux partenaires de communication (A ; B, C), conformément auquel, entre les au moins deux partenaires de communication (A ; B, C), une connexion vocale est initialement établie par l'intermédiaire d'un réseau téléphonique, connexion pour l'établissement de laquelle les partenaires de communication utilisent respectivement un composant vocal (2, 2', 2"), à savoir un terminal destiné à la communication vocale ou une unité fonctionnelle d'un appareil électronique, conçue pour les communication vocales, et, après la création de la connexion vocale entre les partenaires de communication concernés (A ; B, C) une connexion supplémentaire est établie au moyen de composants vidéo (3, 3', 3"), à savoir au moyen d'appareils ou d'unités à fonction d'appareils conçus pour les communications vidéo, à des fins de communication visuelle, en transmettant, du côté d'au moins l'un des partenaires de communication (A ; B, C), une demande de connexion à un service de réseau central (1) au moyen de laquelle il est déterminé qu'il existe une connexion vocale entre les partenaires de communication (A ; B, C) et la connexion vidéo souhaitée est établie sur la base d'une association entre un attribut d'adressage du composant vidéo (3, 3', 3") de chacun des partenaires de communication (A ; B, C) et le numéro d'appel du composant vocal (2, 2', 2") du même partenaire de communication respectif ou les données d'adressage du terminal distant sont transmises au composant vidéo (3, 3', 3") du partenaire de communication (A ; B, C) demandant la connexion vidéo pour l'établissement de la connexion correspondante, dans lequel le composant vidéo (3, 3', 3") d'au moins un partenaire de communication (A ; B, C) et le composant vocal (2, 2', 2") utilisé pour la connexion vocale ou un autre composant vocal du même partenaire de communication (A ; B, C) forment une unité vocale-vidéo combinée en étant intégrés à un appareil ou du fait de l'existence d'une connexion fonctionnelle directe entre ceux-ci du côté de l'abonné, **caractérisé en ce que** la demande de connexion est transmise au service de réseau central (1) par actionnement d'un élément de commande sur le composant vidéo (3, 3', 3") utilisé à cet effet ou par lancement d'une application exécutable par le composant vocal (2, 2', 2") utilisé pour la connexion vocale, dans lequel l'association entre l'attribut d'adressage des composants vidéo des partenaires de communication (A ; B, C) et les numéros d'appel de leur composant vocal (2, 2', 2") mis en jeu dans la connexion vocale existante est prise en compte par le service de réseau central (1) ou peut-être créée par celui-ci et **en ce que**, après l'établissement réussi de la connexion vidéo, la connexion vocale et la connexion vidéo sont réunies en une seule connexion dans la section formée entre l'unité vocale-vidéo combinée utilisée dans le cas de l'au moins un partenaire de communication (A ; B, C) pour la communication et un réseau d'accès utilisé par ladite unité vocale-vidéo pour la connexion vidéo.

2. Procédé selon la revendication 1, **caractérisé en ce que** l'association entre le numéro d'appel d'un partenaire de communication (A ; B, C) et un attribut d'adressage du composant vidéo (3, 3', 3") utilisé pour la connexion vidéo par le même partenaire de communication (A ; B, C) est créée sur la base d'un enregistrement auprès du service de réseau central (1) et une entrée correspondante est stockée à cet effet dans une banque de données du service de réseau central (1).

3. Procédé selon la revendication 1 ou 2, **caractérisé en ce que**, en tant que connexion vidéo, on utilise une connexion IP qui est établie sur la base d'une demande de connexion correspondante de tous les partenaires de communication (A ; B, C) auprès du service de réseau central.

4. Procédé selon l'une quelconque des revendications 1 à 3, dans lequel plusieurs partenaires de communication (A ; B, C) communiquent les uns avec les autres sur un réseau téléphonique, **caractérisé en ce qu'**une connexion vidéo supplémentaire est établie entre au moins deux partenaires de communication (A ; B, C) dans le cadre d'une conférence téléphonique correspondante.

5. Système de télécommunication audiovisuelle entre au moins deux partenaires de communication (A ; B, C), et plus précisément, système de communication constitué d'un composant vocal respectif (2, 2', 2") pour chaque partenaire de communication (A ; B, C), à savoir un terminal destiné à la communication vocale ou une unité fonctionnelle d'un appareil électronique, conçue pour les communications vocales, d'un composant vidéo respectif (3, 3', 3") pour chaque partenaire de communication (A ; B, C), à savoir un appareil conçu pour les communications vidéo ou une unité à fonction d'appareil conçue à cet effet, d'un réseau de communication ou de plusieurs réseaux de communication entre lesquels sont disposés des dispositifs de transmission en réseau, et d'unités matérielles et logicielles en tant que partie de l'infrastructure d'au moins un réseau de communication, qui fournissent un service de réseau central (1), dans lequel
- le composant vidéo (3, 3', 3") d'au moins un partenaire de communication (A ; B, C) et le composant vocal (2, 2', 2") ou un autre composant vocal du même partenaire de communication (A ; B, C) utilisé pour la connexion vocale forment une unité vocale-vidéo combinée en étant intégrés à un appareil ou du fait de l'existence d'une connexion fonctionnelle directe entre ceux-ci du côté de l'abonné,
- une première connexion de communication existe entre les composants vocaux (2, 2', 2") de partenaires de communication (A ; B, C) en tant que connexion vocale par l'intermédiaire d'un réseau téléphonique et une seconde connexion de communication existe entre les composants vidéo (3, 3', 3") des mêmes partenaires de communication (A ; B, C),
- au moins une adresse de communication et/ou un attribut d'adressage respectif sont enregistrés dans une banque de données maintenue par les unités fournissant le service de réseau, tant pour les composants vocaux (2, 2', 2") des partenaires de communication (A ; B, C) connectés les uns aux autres par l'intermédiaire de la connexion vocale que pour leurs composants vidéo (3, 3', 3") simultanément connectés les uns aux autres par l'intermédiaire de la connexion vidéo pour l'utilisation du service de réseau central (1),
- une relation entre le numéro d'appel du composant vocal (2, 2', 2") utilisé pour la connexion vocale par le partenaire de communication respectif (A ; B, C) et un attribut d'adressage du composant vidéo (3, 3', 3") utilisé par le même partenaire de communication (A ; B, C) pour la connexion vidéo est créée dans la banque de données,
- la connexion vidéo est établie sur la base de l'existence de la connexion vocale entre les partenaires de communication (A ; B, C) et d'une demande de connexion correspondante par au moins l'un des partenaires de communication (A ; B, C) ainsi que sur la base de ladite relation précitée établie dans la banque de données,
**caractérisé en ce que** la connexion vidéo, dans la section formée entre l'unité vocale-vidéo combiné utilisée pour les communications dans le cas de l'au moins un partenaire de communication (A ; B, C), et un réseau d'accès utilisé pour la connexion vidéo par ladite unité vocale-vidéo sont réunis en une seule connexion.

6. Système de communication selon la revendication 5, **caractérisé en ce que** les composants vidéo (3, 3', 3") des partenaires de communication (A ; B, C) sont intégrés respectivement du côté de l'abonné dans un réseau local à un routeur (4, 4') et **en ce que** la connexion vidéo établie entre les composants vidéo (3, 3', 3") est une connexion IP.

7. Système de communication selon la revendication 6, **caractérisé en ce que** le composant vidéo (3, 3', 3") d'au moins un partenaire de communication (A ; B, C) est connecté en réseau au moyen du routeur associé (4, 4') par l'intermédiaire d'une connexion WLAN.

8. Système de communication selon la revendication 6, **caractérisé en ce que** le composant vidéo (3, 3', 3") d'au moins un partenaire de communication (A ; B, C) est connecté en réseau au routeur associé (4, 4') par l'intermédiaire d'une connexion Bluetooth.

9. Système de communication selon la revendication 5 ou 6, **caractérisé en ce que** le composant vidéo (3, 3', 3") d'au moins un partenaire de communication est un cadre électronique numérique avec caméra intégrée.
